# EUROPEAN PATENT APPLICATION

(11) **EP 4 644 212 A1**
(43) Date of publication of application: **05.11.2025**
(21) Application number: 24173441.7
(22) Date of filing: 30.04.2024
(51) Int. Cl.: B62D 5/00

(54) **STEER-BY-WIRE STEERING ASSEMBLY WITH A TORQUE GENERATOR**

(71) Applicant: Chassis Autonomy SBA AB, 461 34 Trollhättan (SE)
(72) Inventor: Mathews, Christian, 13347 Berlin (DE)
(74) Representative: Uexküll & Stolberg

(57) **Abstract**

A steering assembly for a steer-by-wire steering system includes a handwheel actuator with an actuator shaft rotatable about a first rotation axis. It also includes a feedback motor with a drive shaft rotatable about a second axis, and a torque generator configured to generate a torque in dependence of relative rotation between a first generator portion coupled with respect to the actuator shaft and a second generator portion operatively coupled to the drive shaft. The drive shaft is configured to rotate together with the actuator shaft with a relative angular offset between the drive shaft and the actuator shaft in order to generate a torque with the torque generator.

## Description

### Field

The technology relates to the field of automotive engineering, specifically to steering systems for vehicles. In particular, it focuses on steer-by-wire (SbW) steering systems.

### Background

Steer-by-wire (SbW) steering systems have been developed as an alternative to traditional mechanical steering systems in vehicles. In a SbW system, the steering input from the driver is transmitted electronically to the vehicle's wheels, eliminating the need for a mechanical linkage between the steering wheel and the road wheels. This offers several advantages, such as reduced weight, increased design flexibility, and the potential for advanced control algorithms to improve vehicle handling and safety.

However, SbW systems also present some challenges, particularly in terms of providing the driver with an appropriate level of tactile feedback. In a traditional steering system, the mechanical linkage between the steering wheel and the road wheels transmits forces that provide the driver with tactile feedback, allowing them to feel the interaction between the vehicle's wheels and the road surface. This feedback is an aspect of the traditional driving experience and helps the driver to accurately gauge the vehicle's response to steering inputs, contributing to a more intuitive and safer driving experience.

In a SbW system, the absence of a mechanical linkage means that the driver does not receive direct feedback from the road wheels when they engage the road surface. This can result in a lack of tactile feedback, leading to a less intuitive and potentially less safe driving experience. Furthermore, the lack of direct feedback may cause the driver to feel disconnected from the vehicle's dynamics, potentially reducing their ability to control the vehicle effectively.

One approach to addressing this issue is disclosed in EP 2 562 063 B, which describes a steering unit for a steer-by-wire steering system. The steering unit comprises a first section of a steering column and a second section of the steering column, with a return spring and a coupling moment means with springs coupled between the two sections. The coupling moment means allows a rotation of the two sections relative to each other over a limited angle, providing some level of tactile feedback to the driver.

However, this solution has several shortcomings. Firstly, the use of a return spring and a spring assembly in the coupling moment means increases the size and complexity of the steering unit, potentially making it more difficult to integrate into a vehicle's design. Secondly, if the torque generated by the coupling moment means needs to be adjusted, the springs must be replaced, which can be difficult and time-consuming after assembly.

### Summary

According to a first aspect of the disclosure, a steering assembly for a steer-by-wire steering system is provided. The assembly comprises a handwheel actuator having an actuator shaft that is rotatable about a first rotation axis. The assembly also includes a feedback motor with a drive shaft that is rotatable about a second axis. A torque generator is configured to generate a torque in dependence of relative rotation between a first generator portion coupled with respect to the actuator shaft and a second generator portion operatively coupled to the drive shaft. The drive shaft is configured to rotate together with the actuator shaft with a relative angular offset between the drive shaft and the actuator shaft in order to generate a torque with the torque generator.

Optionally in some examples, the steering assembly further comprises a controller configured to control the feedback motor based on the relative angular offset.

Optionally in some examples, the steering assembly further comprises a first rotation sensor configured to determine a first angular offset of the actuator shaft, and a second rotation sensor configured to determine a second angular offset of the drive shaft. This allows for accurate measurement of the angular offsets, which can enhance the precision of the steering system.

Optionally in some examples, the controller is configured to determine the relative angular offset based on the first angular offset and the second angular offset.

Optionally in some examples, the controller is configured to actuate the feedback motor if the determined relative angular offset is greater than a threshold relative angle.

Optionally in some examples, the threshold relative angle is adjustable based on user preference or driving conditions. This allows for a customizable steering experience, as the user can adjust the threshold relative angle to suit their personal preference or the current driving conditions.

Optionally in some examples, the torque generator comprises a spring assembly configured to generate the torque when the first generator portion rotates with respect to the second generator portion.

Optionally in some examples, the spring assembly comprises a first spring and a second spring, one of the first spring and the second spring compressing and the other of the first spring and the second spring extending when the actuator shaft rotates about the first rotation axis.

Optionally in some examples, the second rotation axis is parallel with or angled with respect to the first rotation axis.

Optionally in some examples, the steering assembly further comprises a drive transmission operatively coupling the feedback motor to the second generator portion.

Optionally in some examples, the drive transmission comprises a motor gear wheel mounted on the drive shaft, a torque generator gear wheel coupled to the second generator portion, and a belt connecting the motor gear wheel and the torque generator gear wheel.

Optionally in some examples, the drive transmission further comprises intermediate gears operatively coupled between the motor gear wheel and the torque generator gear wheel.

Optionally in some examples, the feedback motor is mounted inside or outside the hand wheel actuator. This allows for a more compact design of the steering assembly, as the feedback motor can be positioned to optimise the use of space within the assembly.

According to a second aspect of the disclosure, a method of controlling a steering assembly is provided. The method comprises determining a first angular offset of the actuator shaft based on a signal received from the first rotation sensor, determining a second angular offset of the drive shaft based on a signal received from the second rotation sensor, determining a relative angular offset based on the first angular offset and the second angular offset, and actuating the feedback motor based on the determined relative angular offset to generate a torque with the torque generator.

Optionally in some examples, the method further comprises controlling the feedback motor to adjust the relative angular offset to control the torque generated by the torque generator.

Optionally in some examples, the method further comprises actuating the feedback motor if the determined relative angular offset is greater than a threshold relative angle.

Optionally in some examples, the threshold relative angle is between 1 and 5 degrees. This allows for a more responsive steering system, as the feedback motor is only actuated when the relative angular offset exceeds a small threshold, thereby providing a more immediate response to the user's steering input.

### Brief Description of the Drawings

Examples are described in more detail below with reference to the appended drawings.
Figure 1 is a perspective view of the steering assembly for a steer-by-wire steering system having a torque generator according to an example.
Figure 2 shows a side view of the steering assembly for a steer-by-wire steering having a handwheel actuator and a torque generator according to an example.
Figure 3 shows a cross-sectional side view of the steering assembly for a steer-by-wire steering as shown in Figure 2, according to an example.
Figure 4 shows a front cross-sectional view of the steering assembly for a steer-by-wire steering according to an example.
Figure 5 shows a schematic view of a steer-by-wire steering system according to an example.
Figure 6 shows a graph of the torque exerted on the hand wheel actuator of the steering assembly versus the relative angle offset (angle_diff) between the actuator shaft of the hand wheel actuator and the drive shaft of the feedback motor according to an example.
Figure 7a, 7b, and 7c show schematic representations of the handwheel actuator and the drive shaft of the steering assembly in various positions and rotations according to an example.
Figure 8 shows a flow diagram of the method steps performed by a steer-by-wire steering system having a torque generator according to an example.
Figure 9 shows a perspective view of the steering assembly for a steer-by-wire steering system having a torque generator operatively according to another example.

### Detailed Description

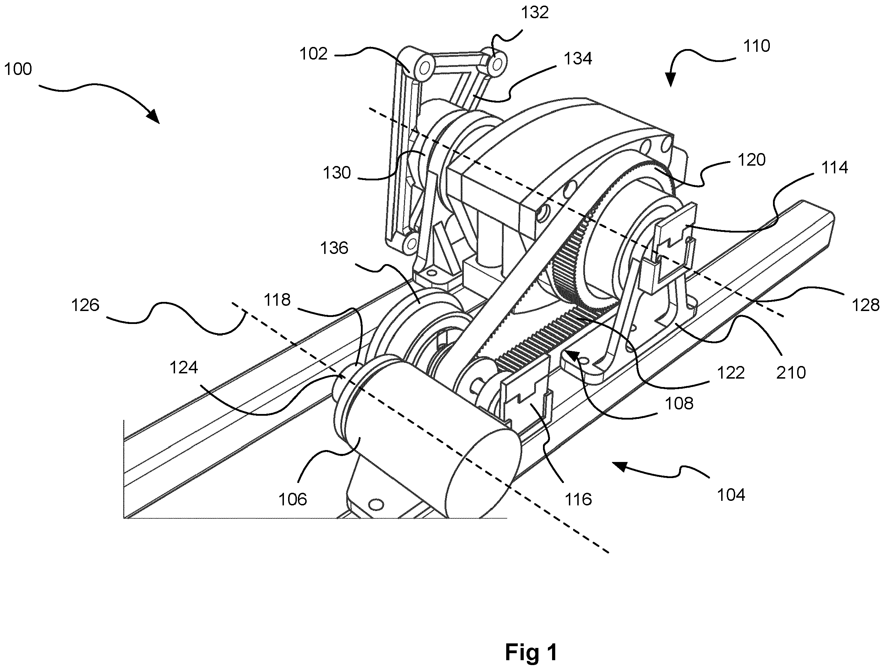

Figure 1 shows a perspective view of a steering assembly 100 for a steer-by-wire steering system having a torque generator 110 operatively coupled between a feedback motor 106 and an actuator shaft 130 of a handwheel actuator 102.

The steering assembly 100 provides tactile feedback to the user, simulating the feel of a traditional mechanical steering system. The steering assembly 100 is configured to operate such that a torque is generated in response to a user's steering input, providing a realistic steering experience. The steering assembly 100 will now be discussed in reference to Figure 1.

The steering assembly 100 comprises a mounting assembly 210 which is configured to mount to a portion (not shown) of a vehicle. The mounting assembly 210 may be fastened via bolts (not shown) or any other suitable fastener. The mounting assembly 210 projects from the steering assembly 100 and can comprise any suitable shape to mount onto the portion of the vehicle. The mounting assembly 210 can comprise a plurality of parts which are separated and allow the steering assembly 100 to be mounted to a portion of the vehicle.

The steering assembly 100 is designed to provide a realistic steering experience by generating a torque in response to the user's steering input. This is achieved through the interaction of several components within the steering assembly 100, including a handwheel actuator 102, a feedback motor assembly 104, and a torque generator 110 as described below. The torque generator 110 is operatively mounted between the handwheel actuator 102 and the feedback motor assembly 104 and configured to generate a torque when the user rotates the handwheel actuator 102. The handwheel actuator 102, the feedback motor assembly 104, and the torque generator 110 and their components will be discussed in more detail below.

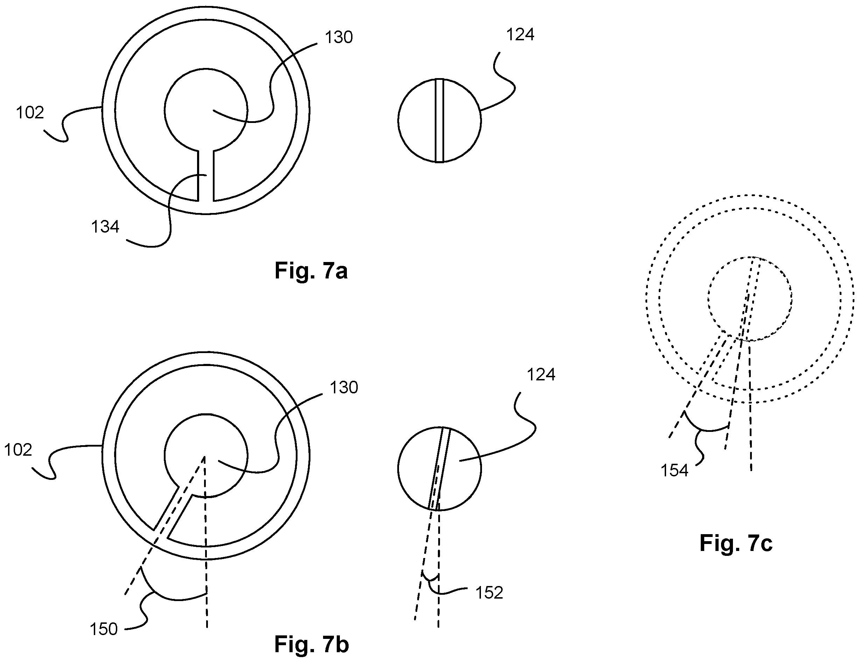

The handwheel actuator 102 is configured to rotate with user input about a first rotation axis 128 as shown in Figure 1. The handwheel actuator 102 includes a steering wheel armature 132 that provides a gripping surface for the user. The steering wheel armature 132 is connected to the actuator shaft 130 via at least one spoke 134 can have a circular shape e.g. as shown in Figures 7a - 7c or can have another form such as that shown in Figure 1 e.g. a triangular shape. The at least one spoke 134 serves to connect the steering wheel armature 132 to the actuator shaft 130. The actuator shaft 130 is fixed with respect to the actuator shaft 130, allowing for the rotation of the handwheel actuator 102 in response to user input. The actuator shaft 130 is coaxial with the first rotation axis 128 as shown in Figure 1.

The feedback motor assembly 104 is as shown in Figure 1 is operatively coupled to the torque generator 110. The feedback motor assembly 104 includes a drive transmission 108, which is responsible for transmitting the torque from the feedback motor 106 to the torque generator 110. In some examples, the drive transmission 108 includes a motor gear wheel 118, a torque generator gear wheel 120, and a belt 122. The motor gear wheel 118 is mounted on a drive shaft 124 of the feedback motor 106, while the torque generator gear wheel 120 is coupled to the torque generator 110 as mentioned below. The belt 122 connects the motor gear wheel 118 and the torque generator gear wheel 120, allowing for efficient transmission of torque therebetween.

The torque generator 110 is configured to generate a torque in dependence of relative rotation between a first generator portion 142 and a second generator portion 144 of the torque generator 110. The torque generator 110 and its operation will be described in reference to the accompanying Figures.

The first generator portion 142 is coupled with respect to the actuator shaft 130, while the second generator portion 144 is operatively coupled to the drive shaft 124. In some examples, the first generator portion 142 is fixed with respect to the actuator shaft 130. This means that the first generator portion 142 rotates when the actuator shaft 130 and the handwheel actuator 102 rotates. In some other examples, the first generator portion 142 is operatively coupled to the actuator shaft 130 and one or more components may be mounted between the first generator portion 142 and the actuator shaft 130.

In some examples, the second generator portion 144 is fixed to the torque generator gear wheel 120 which is connected to the feedback motor 106 via the drive transmission 108. The torque generator 110 includes a spring assembly 146 that generates a steering feedback torque when the first generator portion 142 rotates with respect to the second generator portion 144. The spring assembly 146 is coupled between the first generator portion 142 and the second generator portion 144 as illustrated in the accompanying Figures. Whilst the spring assembly 146 is shown mounted between the first generator portion 142 and the second generator portion 144, the spring assembly 146 can be mounted in any position such that it generates a force when the first generator portion 142 moves with respect to the second generator portion 144.

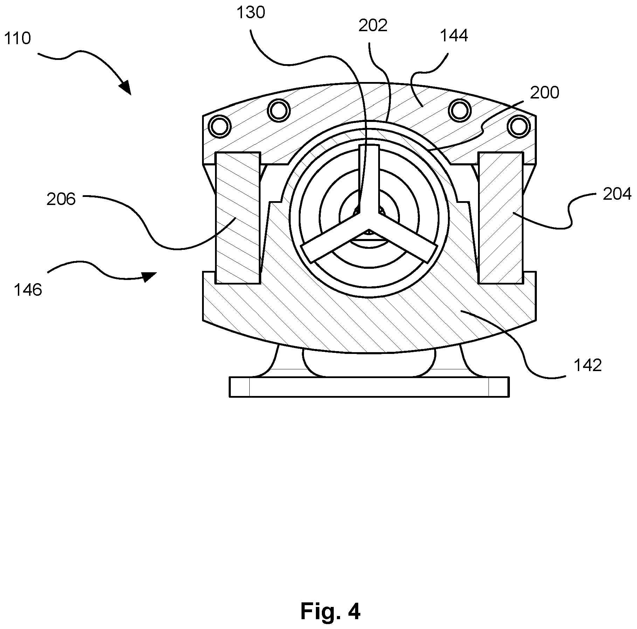

The spring assembly 146 as shown in Figure 4 includes a first spring 204 and a second spring 206. One of the first spring 204 and the second spring 206 compresses and the other of the first spring 204 and the second spring 206 extends when the actuator shaft 130 rotates about the first rotation axis 128. The first spring 204 and the second spring 206 are components of the torque generator 110 as they allow for the generation of steering torque.

In some examples, the feedback motor 106 is configured to rotate the second generator portion 144 of the torque generator 110. The rotation of the second generator portion 144 with respect to the first generator portion 142 maintains or adjusts spring deflection and therefore the desired torque of the torque generator 110. The feedback motor 106 is connected to the drive shaft 124, which is configured to rotate together with the actuator shaft 130 with a relative angular offset (angle_diff) 154 between the drive shaft 124 and the actuator shaft 130 in order to generate a torque with the torque generator 110.

The drive shaft 124 of the feedback motor 106 is configured to rotate together with the actuator shaft 130 with a relative angular offset (angle_diff) 154 between the drive shaft 124 and the actuator shaft 130. When the drive shaft 124 of the feedback motor 106 is in a position with a relative angular offset (angle_diff) 154, the first generator portion 142 and the second generator portion 144 will be moved with respect to each other. For example, there will be a relative rotational movement between the first generator portion 142 and the second generator portion 144. Accordingly, this will generate a torque with the torque generator 110 as the spring assembly 146 exerts a torque in response.

In some configurations, the drive shaft 124 of the feedback motor 106 is aligned along a second rotation axis 126. The second rotation axis 126 is parallel with the first rotation axis 128. Alternatively, the second rotation axis 126 can be angled with respect to the first rotation axis 128. In some examples, although not shown, the first rotation axis 128 and the second rotation axis 126 are aligned and e.g. coaxial.

As discussed above, the drive transmission 108 includes a motor gear wheel 118 mounted on the drive shaft 124 and a torque generator gear wheel 120 coupled to the second generator portion 144, and a belt 122 connecting the motor gear wheel 118 and the torque generator gear wheel 120. However, the drive transmission 108 may also include optional intermediate gears 136 operatively coupled between the motor gear wheel 118 and the torque generator gear wheel 120. The drive transmission 108 is responsible for transmitting the torque from the feedback motor 106 to the torque generator 110. In some other examples, the drive transmission 108 can be any suitable mechanism for transmitting torque between the feedback motor 106 and the torque generator 110. For example, the drive transmission 108 can alternatively be a gearbox such as a planetary gear system, a combination of a gearbox and belt drive, a chain drive etc.

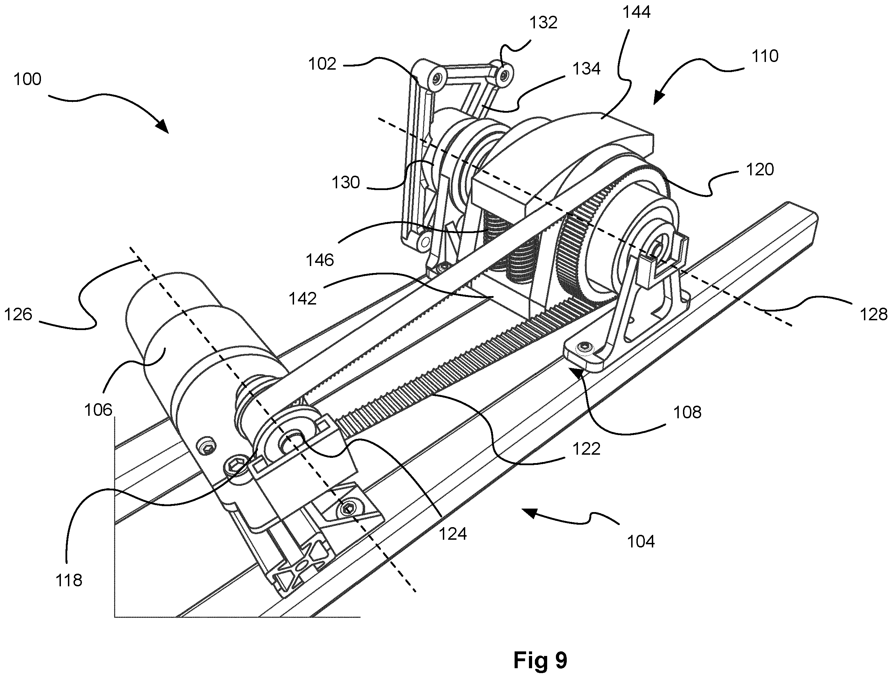

In some examples, the intermediate gears 136 are optional and not necessary. Figure 9 shows a similar arrangement to that shown in Figure 1 and provides a similar functionality to that described in reference to Figure 1. However, Figure 9 shows a perspective view of the steering assembly 100 for a steer-by-wire steering system having a torque generator 110 operatively coupled between a feedback motor 106 and an actuator shaft130 of a handwheel actuator 102, with the drive shaft 124 directly coupled to the torque generator 110. In this case, the drive shaft 124 is coupled to the torque generator 110 via a drive belt 122 without intermediate gears 136.

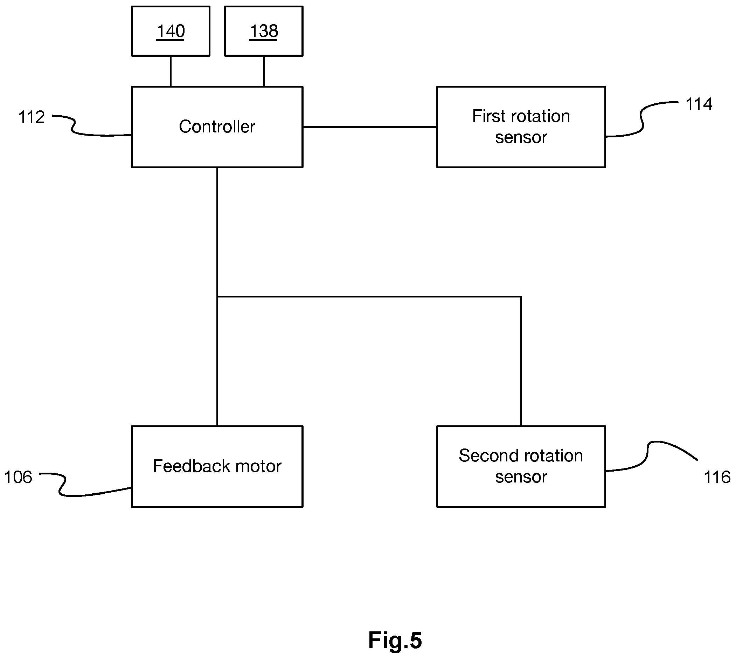

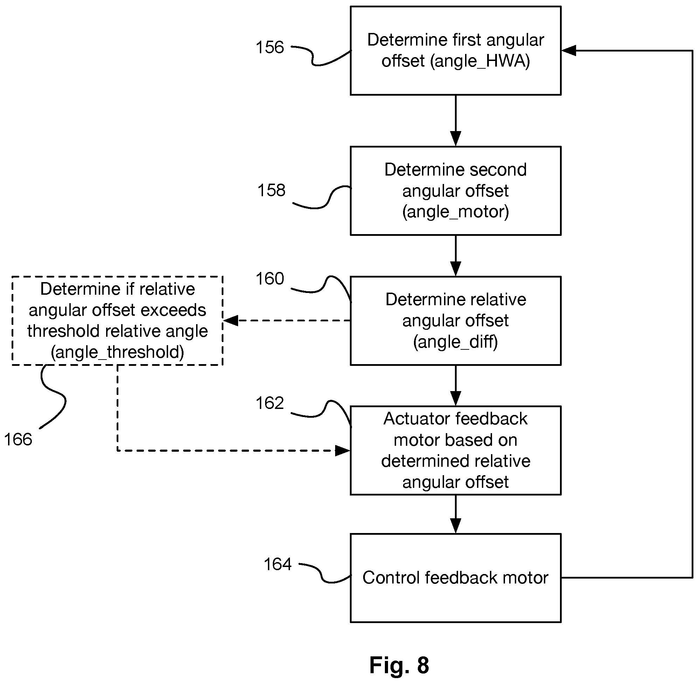

In some configurations, the steering assembly 100 includes a controller 112 (best shown in Figure 5) that employs a feedback control algorithm. The feedback control algorithm is discussed in more detail with respect to Figure 8 below. The controller 112 monitors the relative angular rotation between a first rotation sensor 114 and a second rotation sensor 116 as discussed below. The controller 112 is configured to adjust the torque setting based on the user's steering input and the detected torque. The controller 112 also actuates the feedback motor 106 to rotate the second generator portion 144 when the detected torque exceeds a predetermined amount. Furthermore, the controller 112 maintains an angle difference between the actuator shaft 130 and the drive shaft 124, and regulates the torque applied by the torque generator 110 to generate the desired steering feedback.

In one example, the steering assembly 100 includes a first rotation sensor 114. The first rotation sensor 114 is configured to determine the angular rotation of the actuator shaft 130. The first rotation sensor 114 is connected to the controller 112 and is mounted adjacent to the actuator shaft 130. The first rotation sensor 114 can be a potentiometer sensor, a rotary encoder, a Hall effect sensor, an optical encoder, a resolver sensor, or a synchro sensor. The first rotation sensor 114 can be any suitable sensor for detecting angular rotation of the actuator shaft 130.

In some implementations, the steering assembly 100 includes a second rotation sensor 116. The second rotation sensor 116 is configured to determine the angular rotation of the drive shaft 124. Whilst Figure 1 shows the second rotation sensor 116 detecting the rotation of the drive shaft 124, in other examples, the second rotation sensor 116 can detect the rotation of another component in the feedback motor assembly 104 e.g. a component in the drive transmission 108. For example, the second rotation sensor 116 is connected to the controller 112 and can be mounted adjacent to the drive shaft 124, the second generator portion 144, or an intermediate gear 136 to detect angular rotation thereof. In some other examples, additionally or alternatively, the second rotation sensor 116 can be the feedback motor 106 itself or can be the same type as the first rotation sensor 114. For example, the feedback motor 106 can be a servo motor which sends rotational position information to the controller 112.

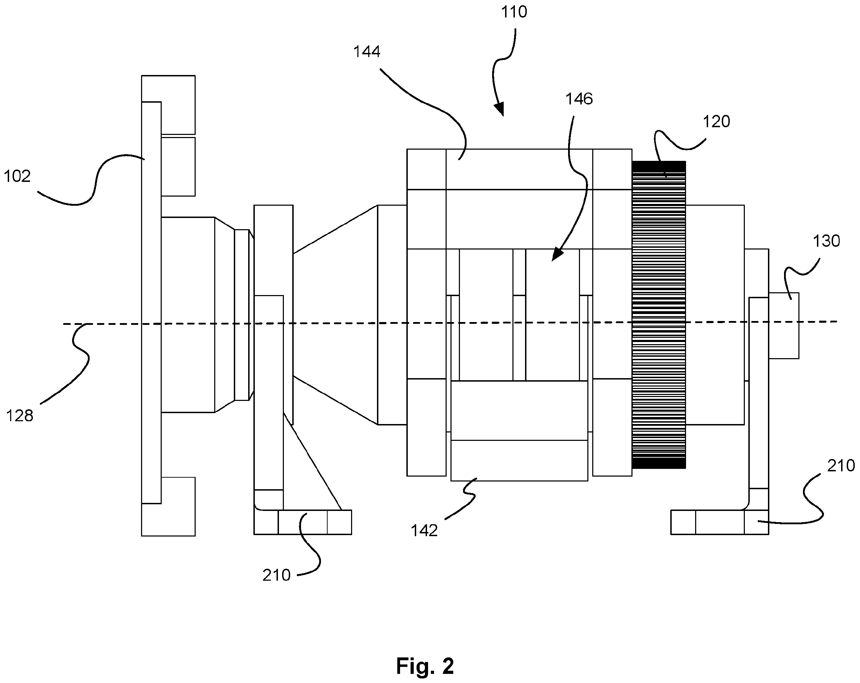

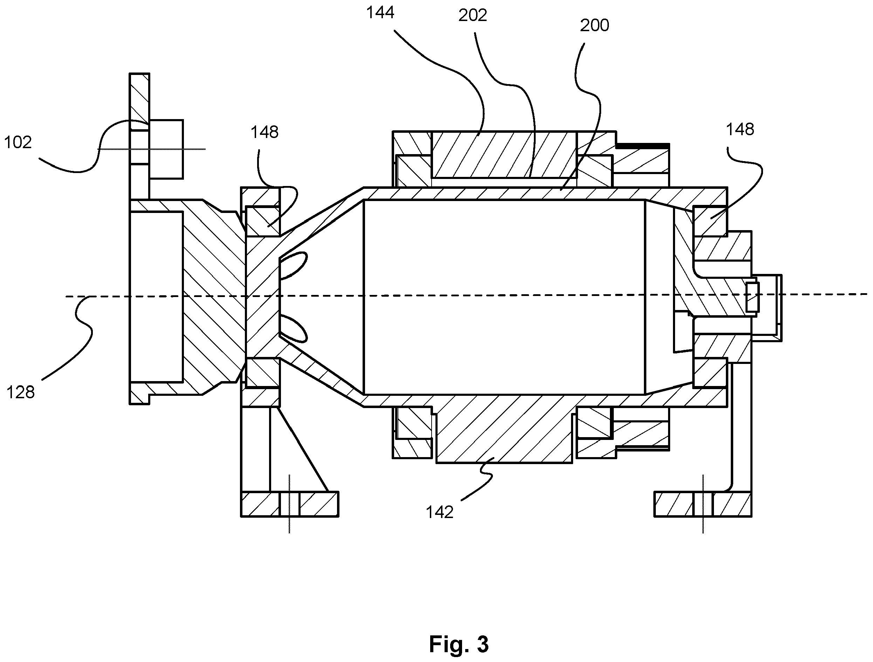

The steering assembly 100 will be discussed further with respect to Figures 2, 3, and 4. Figure 2 shows a side view of the handwheel actuator 102 and the torque generator 110, with the feedback motor 106 and the drive transmission 108 operatively coupled to the torque generator 110. Figure 3 shows a cross-sectional side view of the handwheel actuator 102 and the torque generator 110 as shown in Figure 2. Figure 4 shows a front cross-sectional view of the handwheel actuator 102 and the torque generator 110.

As mentioned above, the first generator portion 142 is coupled with respect to the actuator shaft 130, while the second generator portion 144 is operatively coupled to the drive shaft 124.

In some examples, the torque generator 110 includes a first generator portion 142. As shown in Figure 4, the first generator portion 142 is mounted on a first side of the actuator shaft 130. The first generator portion 142 is an elongate element and configured to rotate about the first rotation axis 128 during operation. The first generator portion 142 is coupled with respect to the actuator shaft 130. In this way, when the actuator shaft 130 rotates, so does the first generator portion 142.

The torque generator 110 includes a second generator portion 144. As shown in Figure 4, the second generator portion 144 is mounted on a second side of the actuator shaft 130, opposite to the first generator portion 142. The second generator portion 144 is operatively coupled to the drive shaft 124. This means that the second generator portion 144 is configured to rotate about the first rotation axis 128 when the drive shaft 124 rotates.

The second generator portion 144 in some examples is another elongate element and configured to rotate about the first rotation axis 128 during operation. The first generator portion 142 and the second generator portion 144 can be any suitable shape or form. In some examples, first generator portion 142 and the second generator portion 144 can comprise reciprocal first and second curved surfaces 200, 202 configured to engage each other and to permit relative rotation therebetween. Whilst the first generator portion 142 and the second generator portion 144 engage each other on the first and second curved surfaces 200, 202, in other examples, the first generator portion 142 and the second generator portion 144 are not configured to physically engage each other when moving relative to each other.

As mentioned above, the spring assembly 146 is coupled between the first generator portion 142 and the second generator portion 144 which prevents disassembly of the first generator portion 142 and the second generator portion 144 and the torque generator 110.

In some configurations, the torque generator 110 includes generator bearings 148. The generator bearings 148 support the rotation of the torque generator 110 components e.g. relative rotation of the first generator portion 142 and the second generator portion 144. The generator bearings 148 keep the first generator portion 142 and the second generator portion 144 in position with respect to each so that the reciprocal first and second curved surfaces 200, 202 can engage each other throughout the range of movement of the steering assembly 100.

The spring assembly 146 as shown in Figure 4 generates steering torque when the first generator portion 142 rotates with respect to the second generator portion 144.

The spring assembly 146 includes a first spring 204 and a second spring 206, which define a threshold feedback torque.

In some examples as shown in the Figures, one of the first spring 204 and the second spring 206 compresses and the other of the first spring 204 and the second spring 206 extends when the actuator shaft 130 rotates about the first rotation axis 128. The spring assembly 146 in some examples can be a first spring 204 and a second spring 206 mounted on either side of the actuator shaft 130.

However, in other examples, the spring assembly 146 can be any suitable mechanism configured to generate a force when the first generator portion 142 and the second generator portion 144 move, rotate, or slide towards or away from each other. For example, the first and second springs 204, 206 of the spring assembly 146 can be one or more of leaf springs, rubber pads, torsion springs, coil springs, dampers, or polyurethane blocks. Indeed, any suitable resiliently deformable material can be used to replace the first and second springs 204, 206.

Whilst the first and second springs 204, 206 are shown in Figure 4 located on a first side and a second side of the actuator shaft 130, in other examples the spring assembly 146 can be arranged longitudinally along the first rotation axis 128 (not shown). This means that the first spring 204 and the second spring 206 extend along the first rotation axis 128. Similarly, the first generator portion 142 and the second generator portion 144 are arranged extending longitudinally along the first rotation axis 128. Each of the first spring, the second spring and the first generator portion 142 and the second generator portion 144 are mounted around the actuator shaft 130. This can reduce the lateral size of the steering assembly 100. In this example, the first generator portion 142 and the second generator portion 144 are separated in the longitudinal direction by the first spring 204 and / or the second spring 206. In this case, the first and second spring 204, 206 may be a torsion spring rather than a compression spring as shown in Figure 4.

Figure 5 shows a schematic view of the steering assembly 100 with the controller 112. The controller 112 is connected to the first rotation sensor 114, the second rotation sensor 116, and the feedback motor 106. The controller 112 may be connected to one or more other sensors or systems as well. In some examples the controller 112 is an ECU or a VCU of a vehicle. The controller 112 monitors the relative angular rotation between the first rotation sensor 114 and the second rotation sensor 116. The controller 112 is configured to adjust the torque setting based on the user's steering input and the detected torque. The torque setting is discussed in more detail below.

The controller 112 also actuates the feedback motor 106 to rotate the second generator portion 144 when the detected torque exceeds a predetermined amount. Furthermore, the controller 112 maintains an angle difference between the actuator shaft 130 and the drive shaft 124, and regulates the torque applied by the torque generator 110 to generate the desired steering feedback during operation.

In some examples, the controller 112 includes a processor 138. The processor 138 is responsible for executing the feedback control algorithm, allowing for the efficient control of the feedback motor 106 and the generation of the desired steering feedback.

In some configurations, the controller 112 includes a memory 140. The memory 140 stores data and instructions for the feedback control algorithm. The memory 140 also retains information for processing by the processor 138, stores calibration parameters for the sensors and motor, and stores historical data for diagnostic and analysis purposes. The memory 140 is a component of the controller 112 as it allows for the efficient storage and retrieval of data and instructions for the feedback control algorithm.

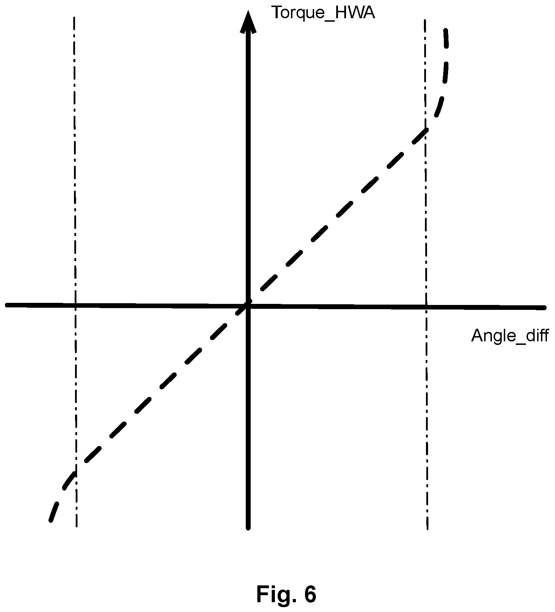

Figure 6 shows a graph of the torque exerted on the handwheel actuator 102 versus the relative angle offset (angle_diff) between the actuator shaft 130 of the handwheel actuator 102 and the drive shaft 124 of the feedback motor 106.

In particular, Figure 6 provides a detailed view of the relative angular offset (angle_diff) 154. The relative angular offset (angle_diff) 154 is the difference between the first angular offset (angle_hwa) 150 and the second angular offset (angle_motor) 152. The relative angular offset (angle_diff) 154 is a parameter in the operation of the steering assembly as it determines the amount of torque generated by the torque generator 110. The relative angular offset (angle_diff) 154 is discussed in more detail with respect to Figures 7a to 7c.

In some implementations, the steering assembly 100 includes a relative angular offset (angle_diff) 154 during operation in order to generate a torque from the torque generator 110. The relative angular offset (angle_diff) 154 is determined by the controller 112 based on the signals received from the first rotation sensor 114 and the second rotation sensor 116.

When the handwheel actuator 102 is in a neutral position, e.g. in a straight-ahead position, the first angular offset (angle_hwa) 150 and the second angular offset (angle_motor) 152 are both zero and there is no relative angular offset (angle_diff) 154. This means that the torque generated by the torquer generator is also zero. As the handwheel actuator 102 is rotated by the user, the relative angular offset (angle_diff) 154 increases (or decreases) depending on the rotational direction of the handwheel actuator 102. As shown in Figure 6, the torque generated is linearly proportional to the relative angular offset (angle_diff) 154. At a certain maximum relative angular offset (angle_diff) 154, the torque generated by the torque generator 110 is no longer linearly proportional. At this point, the spring assembly 146 reaches a maximum deformation. At this point, the feedback motor 106 is inactive e.g. the controller 112 has issued a control instruction to the feedback motor 106 to deactivate until the user turns the handwheel actuator 102 in the opposition rotational direction. This prevents the steering assembly 100 from being damaged by the feedback motor 106.

Figure 6 shows a linear relationship between the torque generated and the relative angular offset (angle_diff) 154. However, in other examples, there is a non-linear relationship between the torque generated and the relative angular offset (angle_diff) 154. This can be achieved with either non-linear first and second springs 204, 206 and / or the controller 112 adjusting the rotation of the drive shaft 124 of feedback motor 106 in a non-linear relationship between the torque generated and the relative angular offset (angle_diff) 154.

Figures 7a, 7b, and 7c show schematic representations of the handwheel actuator 102 and the drive shaft 124 in various positions and rotations. Figures 7a, 7b and 7c provide a detailed view of the first angular offset (angle_hwa) 150 and the second angular offset (angle_motor) 152.

The first angular offset (angle_hwa) 150 is the angle of rotation of the actuator shaft 130 from a reference position as shown in Figure 7b. The reference position in some examples is when the steering assembly 100 is in a predetermined position e.g. a straight-ahead position as shown in Figure 7a. The first angular offset (angle_hwa) 150 is a parameter in the operation of the steering assembly 100. The first angular offset (angle_hwa) 150 is determined by the controller 112 based on the signal received from the first rotation sensor 114.

The second angular offset (angle_motor) 152 is the angle of rotation of the drive shaft 124 from a reference position as shown in Figure 7b. The reference position in some examples is when the steering assembly 100 is in a predetermined position e.g. a straight-ahead position as shown in Figure 7a. The reference position for determining the first angular offset (angle_hwa) 150 and second angular offset (angle_motor) 152 in some examples are the same. That is both the second angular offset (angle_motor) 152 and first angular offset (angle_hwa) 150 are determined in reference from a straight-ahead position. When the steering assembly 100 is in the straight-ahead position, the handwheel actuator 102 is in a neutral position with no torque applied thereto.

The second angular offset (angle_motor) 152 is a parameter in the operation of the steering assembly 100 as it determines the relative angular offset (angle_diff) 154 as shown in Figure 7c, which in turn determines the amount of torque generated by the torque generator 110. The second angular offset (angle_motor) 152 is determined by the controller 112 based on the signal received from the second rotation sensor 116.

Figure 8 shows a flow diagram of the method steps performed by the steering assembly 100. The steering assembly is designed to provide a realistic steering experience by generating a torque in response to the user's steering input. This is achieved through the interaction of several components within the assembly, including the handwheel actuator 102, the feedback motor assembly 104, and the torque generator 110. The operation of the steering assembly 100 will be discussed in more detail with respect to Figure 8.

In some implementations, the method of controlling a steering assembly 100 includes determining the first angular offset (angle_hwa) 150 of the actuator shaft 130 as shown in step 156 in Figure 8. This is achieved based on a signal received from the first rotation sensor 114. The first angular offset (angle_hwa) 150 is the angle of rotation of the actuator shaft 130 from a straight-ahead position.

In some configurations, the method of controlling a steering assembly 100 includes determining the second angular offset (angle_motor) 152 of the drive shaft 124 as shown in step 158 in Figure 8. This is achieved based on a signal received from the second rotation sensor 116. The second angular offset (angle_motor) 152 is the angle of rotation of the drive shaft 124 from a straight-ahead position.

In some examples, the method of controlling a steering assembly 100 includes determining a relative angular offset (angle_diff) 154 as shown in step 160 in Figure 8. The relative angular offset (angle_diff) 154 is the difference between the first angular offset (angle_hwa) 150 and the second angular offset (angle_motor) 152.

In some implementations, the method of controlling a steering assembly 100 includes actuating the feedback motor 106 based on the determined relative angular offset (angle_diff) 154 as shown in step 162. The feedback motor 106 is configured to rotate the second generator portion 144 of the torque generator 110.

The torque is then generated by the torque generator 110 in response to the actuation of the feedback motor 106 based on the determined relative angular offset (angle_diff) 154.

In some configurations, the method of controlling a steering assembly 100 includes optionally determining a threshold relative angle (angle_threshold) as shown in step 166. The threshold relative angle (angle_threshold) is a predetermined value that is used to determine when the feedback motor 106 should be actuated. If the determined relative angular offset (angle_diff) 154 is greater than the threshold relative angle (angle_threshold), the feedback motor 106 is actuated. The threshold relative angle (angle_threshold) is a parameter in the method as it determines when the feedback motor 106 should be actuated to generate a torque with the torque generator 110. The threshold relative angle (angle_threshold) can be greater than 0, between 1 and 5 degrees, between 5 and 15 degrees, adjustable based on user preference, set within a range of 0 to 20 degrees, customizable for different driving conditions, and may vary based on vehicle model and steering system configuration.

In some examples, the threshold relative angle (angle_threshold) is adjustable based on user preference or driving conditions. This allows for the customization of the steering experience, providing a more realistic and comfortable steering experience for the user. The adjustability of the threshold relative angle (angle_threshold) is a feature of the method as it allows for the customization of the steering experience. In this way, the torque setting of the torque generator 110 can be determined by varying the threshold relative angle (angle_threshold). If the threshold relative angle (angle_threshold) is adjusted, then the amount of torque experienced by the user when using the steering assembly 100 will be adjusted as well. This makes the adjustability of the feedback provided by the steering assembly 100 determined by the threshold relative angle (angle_threshold). Accordingly, adjusting the feedback torque does not require replacing the spring assembly 146 e.g. the first and second springs 204, 206.

In some implementations, the method of controlling a steering assembly 100 includes controlling the feedback motor 106 to adjust the relative angular offset (angle_diff) 154 as shown in step 164. This is achieved by actuating the feedback motor 106 based on the determined relative angular offset (angle_diff) 154. Controlling the feedback motor 106 to adjust the relative angular offset (angle_diff) 154 is a step in the method as it allows for the generation of the desired steering feedback. Accordingly, as the user rotates the handwheel actuator 102, the relative angular offset (angle_diff) 154 may vary and the amount of torque generated by the feedback motor 106 is adjusted.

In some configurations, the method of controlling a steering assembly 100 includes controlling the torque generated by the torque generator 110. This is achieved by controlling the feedback motor 106 to adjust the relative angular offset (angle_diff) 154.

Controlling the torque generated by the torque generator 110 is a step in the method as it allows for the generation of the desired steering feedback. The controller 112 regulates the torque applied by the torque generator 110 to generate the desired steering feedback.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealised or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A steering assembly (100) for a steer-by-wire steering system comprising:
a handwheel actuator (102) having an actuator shaft (130) rotatable about a first rotation axis (128);
a feedback motor (106) having a drive shaft (124) rotatable about a second axis (126); and
a torque generator (110) configured to generate a torque in dependence of relative rotation between a first generator portion (142) coupled with respect to the actuator shaft (130) and a second generator portion (144) operatively coupled to the drive shaft (124);
wherein the drive shaft (124) is configured to rotate together with the actuator shaft (130) with a relative angular offset (angle_diff) (154) between the drive shaft (124) and the actuator shaft (130) in order to generate a torque with the torque generator (30).

2. The steering assembly (100) according to claim 1, further comprising a controller (112) configured to control the feedback motor (106) based on the relative angular offset (angle_diff) (154).

3. The steering assembly (100) according to claim 2, further comprising a first rotation sensor (114) configured to determine a first angular offset (angle_HWA) (150) of the actuator shaft (130), and a second rotation sensor (116) configured to determine a second angular offset (angle_motor) (152) of the drive shaft (124).

4. The steering assembly (100) according to claim 3, wherein the controller (112) is configured to determine the relative angular offset (angle_diff) (154) based on the first angular offset (angle_HWA) (150) and the second angular offset (angle_motor) (152).

5. The steering assembly (100) according to any one of claims 2 to 4, wherein the controller (112) is configured to actuate the feedback motor (106) if the determined relative angular offset (angle_diff) (154) is greater than a threshold relative angle (angle_threshold).

6. The steering assembly (100) according to claim 5, wherein the threshold relative angle (angle_threshold) is adjustable based on user preference or driving conditions.

7. The steering assembly (100) according to any one of claims 1 to 6, wherein the torque generator (110) comprises a spring assembly (146) configured to generate the torque when the first generator portion (142) rotates with respect to the second generator portion (144).

8. The steering assembly (100) according to claim 7, wherein the spring assembly (146) comprises a first spring (204) and a second spring (206), one of the first spring (204) and the second spring (206) compressing and the other of the first spring (204) and the second spring (206) extending when the actuator shaft (130) rotates about the first rotation axis (128).

9. The steering assembly (100) according to any one of claims 1 to 8, wherein the second rotation axis (126) is parallel with or angled with respect to the first rotation axis (128).

10. The steering assembly (100) according to any one of claims 1 to 9, further comprising a drive transmission (108) operatively coupling the feedback motor (106) to the second generator portion (144).

11. The steering assembly (100) according to claim 10, wherein the drive transmission (108) comprises a motor gear wheel (118) mounted on the drive shaft (124), a torque generator gear wheel (120) coupled to the second generator portion (144), and a belt (122) connecting the motor gear wheel (118) and the torque generator gear wheel (120).

12. The steering assembly (100) according to claim 11, wherein the drive transmission (108) further comprises intermediate gears (136) operatively coupled between the motor gear wheel (118) and the torque generator gear wheel (120).

13. The steering assembly (100) according to any one of claims 1 to 12, wherein the feedback motor (106) is mounted inside or outside the hand wheel actuator (102).

14. A method of controlling a steering assembly (100) according to any one of claims 1 to 13, the method comprising:
determining a first angular offset (angle_HWA) (150) of the actuator shaft (130) based on a signal received from the first rotation sensor (114);
determining a second angular offset (angle_motor) (152) of the drive shaft (124) based on a signal received from the second rotation sensor (116);
determining a relative angular offset (angle_diff) (154) based on the first angular offset (angle_HWA) (150) and the second angular offset (angle_motor) (152); and
actuating the feedback motor (106) based on the determined relative angular offset (angle_diff) (154) to generate a torque with the torque generator (110).

15. The method according to claim 14, further comprising controlling the feedback motor (106) to adjust the relative angular offset (angle_diff) (154) to control the torque generated by the torque generator (110) preferably further comprising actuating the feedback motor (106) if the determined relative angular offset (angle_diff) (154) is greater than a threshold relative angle (angle_threshold) preferably wherein the threshold relative angle (angle_threshold) is between 1 and 5 degrees.
